# DEMANDE DE BREVET EUROPEEN

(11) **EP 0 534 857 A1**
(43) Date de publication de la demande: **31.03.1993**
(21) Numéro de dépôt: 92402628.9
(22) Date de dépôt: 24.09.1992
(51) Int. Cl.: C04B 18/14, C04B 7/147

(54) **Béton, notamment du type à hautes performances, et procédé pour sa préparation**

(30) Priorité: 25.09.1991 FR 9111832
(71) Demandeur: SARET FRANCE, F-84132 Le Pontet Cédex (FR)
(72) Inventeur: Lantheaume, Sylvie, F-30900 Nimes (FR); Roux, Jean, F-30400 Villeneuve les Avignon (FR); Jouffrey, Francois, F-84000 Avignon (FR)
(74) Mandataire: Netter, André

(57) **Abrégé**

L'invention concerne un béton du type comprenant, en tant que constituants principaux, un ciment et des granulats, ainsi que des adjuvants éventuels, propres à être malaxés ensemble avec de l'eau pour former un mélange pâteux.

Conformément à l'invention, le béton comprend en outre un laitier de haut-fourneau vitrifié, micronisé à une granulométrie de 0-50 µm, possédant une surface spécifique Blaine de 3000 à 8000 cm2/g et ajouté aux constituants du mélange en substitution ou en ajout au ciment.

On obtient ainsi un béton particulièrement performant qui peut être utilisé notamment dans la fabrication de produits en béton armé ou en béton précontraint.

## Description

L'invention concerne un béton, notamment du type à hautes ou très hautes performances, présentant des caractéristiques physiques et performances mécaniques améliorées, ainsi qu'un procédé pour sa préparation.

Un béton comprend, en tant que constituants principaux, un ciment et des granulats destinés à être malaxés ensemble en présence d'eau pour former un mélange pâteux.

Le mélange pâteux ainsi obtenu est ensuite utilisé directement dans la fabrication ou la préfabrication de produits en béton, béton armé ou béton précontraint, à l'aide de moules ou de coffrages appropriés.

Après coulée du mélange pâteux, la prise du béton peut être accélérée, le cas échéant, par l'action de la chaleur, notamment par étuvage, pour permettre un démoulage ou décoffrage rapide. Cette technique est tout particulièrement utilisée dans les installations de préfabrication de produits en béton armé ou béton précontraint car elle permet d'utiliser les mêmes moules plusieurs fois par jour. En effet, grâce à ce traitement thermique, le béton possède une résistance mécanique suffisante, à l'âge de 6 à 8 heures, pour permettre le démoulage et l'utilisation des moules pour une autre coulée.

Les bétons sont généralement classifiés en trois catégories principales en fonction de la résistance mécanique à la compression (Rc) qu'ils développent à l'âge de 28 jours après la coulée. Il s'agit des bétons normaux ayant une Rc de 35 à 45 MPa (MégaPascals), des bétons à hautes performances ayant une Rc de 45 à 65 MPa et des bétons à très hautes performances ayant une Rc de 65 à 75 MPa, voire davantage.

Les bétons à hautes performances et à très hautes performances sont principalement destinés à la fabrication ou la préfabrication de produits en béton armé ou béton précontraint devant posséder des résistances mécaniques élevées, en compression et en flexion, avec ou sans traitement thermique du béton. Ils conviennent donc particulièrement à la fabrication de dalles, pré-dalles, poteaux, poutres, poutrelles, etc.

Le ciment, qui joue le rôle de liant hydraulique, est obtenu par cuisson d'un mélange de calcaire et d'argile pour former un clinker, lequel est ensuite broyé au moyen d'un broyeur à corps broyants, par exemple d'un broyeur à boulets.

Ce clinker est généralement broyé conjointement avec du gypse et éventuellement un ou plusieurs constituants secondaires, encore appelés ajouts, par exemple des pouzzolanes, pour modifier les propriétés et caractéristiques du ciment.

Dans un béton classique, on utilise un ciment de qualité normale, par exemple un CPA (Ciment Portland Artificiel) qui contient seulement du clinker, à un dosage de l'ordre de 300 kg/m3 à 400 kg/m3.

On utilise aussi des ciments appelés CPJ (Ciment Portland aux Ajouts), c'est-à-dire des ciments Portland obtenus par cobroyage du clinker avec des ajouts ou constituants secondaires, généralement des sous-produits, qui permettent de modifier et d'adapter les caractéristiques du ciment en fonction de l'utilisation à laquelle il est destiné.

Les granulats, parfois appelés agrégats, qui entrent dans la fabrication des bétons sont formés habituellement de sable, de gravier, de cailloux ou de leurs mélanges. Dans tous les cas, il s'agit de produits grossiers à granulométrie élevée, c'est-à-dire supérieure à 80 µm.

Dans la fabrication d'un béton, on utilise très souvent un ou plusieurs adjuvants malaxés en même temps que le ciment et les granulats pour modifier les propriétés et les performances du béton. Ces adjuvants, qui sont ajoutés en faibles quantités, c'est-à-dire de l'ordre de un ou quelques pour cent en poids du mélange, sont des produits de diverses natures qui peuvent par exemple accélérer ou retarder la prise du béton, modifier sa couleur, modifier sa rhéologie à l'état pâteux, etc.

Les adjuvants le plus couramment utilisés sont des fluidifiants ou super-plastifiants destinés à diminuer la quantité d'eau de gâchage tout en maintenant une bonne rhéologie du mélange pâteux. Ces adjuvants particuliers permettent de défloculer les particules du ciment pour qu'elles soient bien hydratées par l'eau. En diminuant la quantité d'eau de gâchage, on facilite la prise du béton et on évite, après évaporation de l'eau, la formation de cavités trop importantes susceptibles de nuire à la cohésion et à la résistance mécanique du béton.

Comme indiqué précédemment, il est connu aussi d'utiliser différents constituants secondaires ou ajouts que l'on incorpore lors de la fabrication du ciment pour en modifier ses caractéristiques et performances.

Parmi ces constituants additionnels, on peut citer en premier lieu les produits pouzzolaniques qui sont mélangés et cobroyés avec le clinker lors de la fabrication du ciment. Ces produits ont la propriété de capter la chaux contenue dans le ciment pour former des hydrates de type C-S-H. Ces produits sont, en tant que tels, dépourvus de propriétés hydrauliques, mais forment un liant hydraulique en présence de chaux.

Ils se trouvent soit à l'état de gisements (pouzzolanes naturelles), soit de sous-produits de l'industrie (cendres volantes) ou encore sous forme de produits plus élaborés (méta-kaolin). Ils ont tous des caractéristiques physiques et chimiques différentes, ce qui se traduit par des avantages ou des inconvénients lors de leur utilisation.

Les pouzzolanes naturelles sont des matériaux d'origine volcanique ou d'origine organique (spongolites, diatomites).

Les pouzzolanes volcaniques sont dépendantes des sites d'extraction situés principalement en France dans le Massif Central. Elles se présentent sous forme de billes de plusieurs millimètres de diamètre. Leur utilisation est liée à leur composition chimique et à leur degré de vitrification qui diffèrent d'un gisement à l'autre.

Les pouzzolanes d'origine organique sont composées essentiellement de silice. Ce sont des produits qui nécessitent un broyage à faible énergie pour désagglomérer les particules. Toutefois, ces produits, en raison de leur grande surface spécifique, diminuent la rhéologie du béton frais.

Les cendres volantes sont les résidus de la combustion du charbon dans les centrales thermiques. Les plus répandues sont les cendres sulfo-alumineuses qui proviennent de la combustion de la houille. Elles se présentent sous forme de sphérules de granulométrie comprise entre 0,5 et 200 µm pour une surface spécifique Blaine comprise entre 2500 et 4000 cm2/g et une surface spécifique B.E.T. de 0,8 à 1,5 m2/g.

L'utilisation des cendres volantes dans le béton améliore la rhéologie et la durabilité. La réactivité des cendres volantes est plus faible que celle du ciment, ce qui se traduit par une faible chaleur d'hydratation et des résistances à court terme moins élevées. Ce facteur peut être augmenté par le broyage des cendres de manière à diminuer les dimensions des particules.

Les méta-kaolins sont des produits obtenus par calcination de kaolins, entre 600 et 800°C. Cette cuisson modifie la structure initiale de l'argile par déshydratation, déshydroxylation puis désorganisation à l'échelle moléculaire. Cette amorphisation confère au méta-kaolin une très grande réactivité vis-à-vis de la chaux. La surface spécifique B.E.T. des méta-kaolins est comprise entre 7 et 3,5 m2/g selon leur provenance. L'avantage de la grande réactivité des méta-kaolins est contre-balancé par l'inconvénient de leur structure en plaquettes qui absorbe une grande quantité d'eau lors du mouillage. Ceci se traduit par une forte diminution de la rhéologie. De plus, le méta-kaolin est un produit industriel commercialisé à un prix élevé.

Il existe aussi sur le marché des sous-produits ayant directement une réactivité hydraulique. C'est le cas des cendres volantes sulfo-calciques, issues de la combustion de la lignite. Cependant, les centrales thermiques utilisant ce combustible sont peu nombreuses et tendent à disparaître.

Parmi les autres constituants secondaires, encore appelés ajouts, pouvant être utilisés dans la fabrication des ciments, on peut citer le laitier de haut-fourneau qui est cobroyé avec le clinker pour former ce que l'on appelle un ciment au laitier.

Le laitier de haut-fourneau est un coproduit de la fabrication de la fonte qui trouve deux utilisations principales : l'une dans la technique routière et l'autre dans les industries du ciment et du béton.

Le laitier de haut-fourneau est recueilli à l'état liquide en sortie d'un haut-fourneau et est ensuite soumis, soit à un refroidissement lent pour former un laitier cristallisé, soit un refroidissement rapide par trempe pour former un laitier vitrifié, lequel peut être soit granulé, soit bouleté.

Le laitier cristallisé est utilisé essentiellement comme granulat. Par contre, le laitier vitrifié, sous forme granulée ou sous forme bouletée, possède des propriétés de liant hydraulique lorsqu'il est mis en présence d'un activant.

Le laitier vitrifié est utilisé comme liant en technique routière et en génie civil, soit sous forme de mélange de graves, de laitier et d'activant, soit sous forme de mélange de sable, de laitier et d'activant.

Le laitier vitrifié est aussi utilisé en cimenterie, comme déjà mentionné, en étant cobroyé avec le clinker.

Il est connu aussi d'employer du laitier vitrifié, sous forme granulée ou sous forme bouletée, en remplacement de tout ou partie du sable dans la fabrication d'un béton.

Dans toutes les applications précitées, le laitier a toujours été employé sous une forme grossière, c'est-à-dire avec une granulométrie de l'ordre de 0-2 mm, telle qu'obtenue par des broyeurs à corps broyants, comme des broyeurs à boulets.

Même dans le cas où le laitier est broyé en même temps qu'un clinker pour la fabrication d'un ciment au laitier, la granulométrie de ce laitier est encore relativement grossière puisqu'elle correspond à une surface spécifique Blaine de l'ordre de 2000 à 3000 cm2/g. Par contre, celle du ciment est plus fine puisqu'elle correspond à une surface spécifique Blaine de l'ordre de 5000 à 6000 cm2/g.

Dans toutes les applications connues du laitier comme liant hydraulique, celui-ci développe toujours des résistances mécaniques à long terme, c'est-à-dire à l'âge de 90 jours, voire un an, ce qui ne permet pas son utilisation dans les bétons à hautes performances.

Parmi les autres constituants pouvant entrer dans la fabrication d'un béton, il faut citer aussi les fumées de silice. Il s'agit d'un produit très réactif qui se présente sous la forme de grains ultra-fins de silice, ayant une dimension de l'ordre de 1 µm, et formant ainsi une véritable poussière. Ce produit en lui-même ne constitue pas un liant, mais forme un liant en présence de ciment. Du fait qu'il se présente sous forme de particules très fines, il est difficile à manier et à transporter. En outre, il provoque très fréquemment des colmatages dans les appareils servant à son transport, son malaxage ou son stockage, notamment dans les silos.

C'est la raison pour laquelle on l'utilise habituellement sous une forme densifiée ou non, en bouillie ou bien sous forme d'un produit d'addition avec des adjuvants appropriés pour permettre une bonne dispersion des particules de silice.

Les bétons à hautes performances sont préparés dans les conditions suivantes :
- dosage élevé d'un ciment de haut de gamme (ciment de type 55R, HPR, HTS),
- utilisation de granulats de bonne qualité,
- utilisation d'adjuvants (super-plastifiants ou autres) dans le but de diminuer la quantité d'eau de gâchage tout en maintenant une bonne rhéologie du mélange,
- utilisation de fumées de silice densifiées ou non, en bouillie ou sous forme de produits d'addition.

Dans les ciments haut de gamme mentionnés précédemment, le ciment de type "55R" désigne un ciment ayant une Rc de 55 MPa à 28 jours en prise rapide, le ciment de type "HPR" désigne un ciment à hautes performances rapides et le ciment de type "HTS" désigne un ciment à haute teneur en silice, cela conformément aux normes françaises en vigueur.

Par granulats de bonne qualité, on entend désigner des granulats qui possèdent notamment une granulométrie homogène, une bonne résistance mécanique, une bonne propreté et un coefficient de forme cubique.

Les conditions ci-dessus permettent d'obtenir des bétons à hautes performances possédant des caractéristiques mécaniques élevées (résistance à la compression, à la traction et au fluage) à long terme. Elles permettent aussi d'augmenter les résistances mécaniques de ces bétons à court terme, après traitement thermique, ce qui permet d'obtenir des résultats compatibles avec des cycles de production ayant des maturations de 6 à 12 heures.

Les bétons à hautes performances ainsi obtenus possèdent également des caractéristiques physiques supérieures, principalement dues à une porosité plus faible et plus fine, ce qui permet d'améliorer leur durabilité.

Cependant, ces bétons à hautes performances ont pour inconvénient d'être fabriqués à un coût élevé, de l'ordre de +20% du prix au m3 par rapport aux bétons classiques. Cette augmentation du coût est due principalement au surdosage en ciment, mais surtout à l'utilisation de fumées de silice qui nécessitent une plus grande quantité de fluidifiants pour les disperser. En effet, tous ces produits (ciment, fumées de silice et fluidifiant) sont d'un prix élevé.

L'invention a en conséquence pour but de fournir un béton et spécialement un béton à hautes ou très hautes performances, permettant d'éviter les inconvénients mentionnés ci-dessus.

C'est également un but de l'invention de fournir un tel béton pouvant être obtenu à moindre coût que les bétons à hautes performances connus, tout en possédant des propriétés et performances comparables.

C'est encore un but de l'invention de procurer un tel béton qui ne nécessite pas obligatoirement l'emploi de fumées de silice.

C'est encore un but de l'invention de procurer un tel béton qui peut être utilisé dans la fabrication ou la préfabrication de produits en béton armé ou en béton précontraint, et dont la prise peut être accélérée par action de la chaleur, notamment par étuvage, pour permettre des cycles de fabrication très courts.

L'invention a également pour but de procurer un procédé pour la préparation d'un tel béton.

L'invention propose, à cet effet, un béton du type comprenant, en tant que constituants principaux, un ciment et des granulats ainsi que des adjuvants éventuels propres à être malaxés ensemble avec de l'eau pour former un mélange pâteux.

Conformément à l'invention, le béton comprend en outre un laitier de haut-fourneau vitrifié, micronisé à une granulométrie de 0 à 50 µm, possédant une surface spécifique Blaine de 3000 à 8000 cm2/g et ajouté aux constituants du mélange en substitution ou en ajout au ciment.

Jusqu'à présent, le laitier vitrifié de haut-fourneau était utilisé avec une dimension granulométrique élevée (0-2 mm), telle qu'obtenue avec les techniques de broyage classiques, et le laitier développait des résistances mécaniques, après activation, à long terme, c'est-à-dire environ un an.

En utilisant des techniques de broyage récentes, il est possible d'obtenir un laitier sous forme micronisée, c'est-à-dire ayant une granulométrie de 0-50 µm, ce qui ne pouvait être obtenu jusqu'à présent, même dans le cas où le laitier était broyé conjointement à du ciment. Selon l'invention, il a été constaté qu'un tel laitier micronisé, lorsqu'il est ajouté dans la fabrication d'un béton, permet de développer des résistances à 28 jours, compatibles avec les bétonnages classiques, dans le cas d'une conservation à température ambiante.

De plus, il a été constaté qu'en soumettant le béton frais à l'action de la chaleur, par exemple par un cycle d'étuvage, même d'une courte durée de l'ordre de 6 heures, le laitier micronisé devient utilisable dans la préfabrication de produits en béton armé ou béton précontraint.

Selon l'invention, le laitier vitrifié micronisé est obtenu par broyage ultrafin d'un laitier vitrifié. Un tel laitier vitrifié, de granulométrie grossière, est disponible en tant que coproduit de la fabrication de la fonte. Il peut être fourni soit sous forme granulée, soit sous forme bouletée, en fonction du type de refroidissement par trempe qu'a subi le laitier à l'état liquide. Normalement, le laitier vitrifié, sous forme granulée ou sous forme bouletée, doit subir un prébroyage pour avoir une granulométrie de 0-2 mm. Ce prébroyage s'effectue selon des techniques de broyage classiques à l'aide de broyeurs utilisant des corps broyants, par exemple de broyeurs à boulets.

Selon une autre caractéristique de l'invention, le laitier vitrifié micronisé est obtenu par une technique de broyage par jets d'air ou par presse à rouleaux à partir d'un laitier vitrifié pré-broyé ou non comme défini précédemment.

Conformément à la technique de broyage par jets d'air, on produit au moins deux jets d'air comprimé qui véhiculent les particules à broyer. Ces jets sont dirigés l'un vers l'autre de manière à provoquer des collisions des particules entre elles, qui se traduisent par une micronisation.

Parmi les appareils de broyage par jets d'air pouvant être utilisés pour la mise en oeuvre de l'invention, on peut citer en particulier ceux du type Pulva FP commercialisés par la société finlandaise Oy FINNPULVA AB.

On peut encore mentionner les appareils de broyage par jets d'air commercialisés par la firme allemande ALPINE et la firme française POITTEMILL.

Les techniques de broyage précitées, lorsqu'elles sont appliquées à un laitier vitrifié, permettent d'obtenir un produit micronisé ayant une surface spécifique Blaine comprise entre 3000 et 8000 cm2/g. Grâce à ces nouvelles techniques, on peut maîtriser la granulométrie du produit micronisé fini et ajuster ainsi la réactivité souhaitée du laitier micronisé.

En effet, il a été constaté que la maîtrise du broyage permet d'ajuster la surface de dissolution du laitier vitrifié micronisé et par conséquent sa réactivité.

Bien que l'on puisse utiliser un seul laitier vitrifié micronisé de granulométrie définie, il est possible également d'utiliser un mélange de deux laitiers vitrifiés micronisés ayant des granulométries ou finesses différentes.

Ceci permet, là encore, d'ajuster les caractéristiques et propriétés du béton en fonction de l'utilisation désirée.

Conformément à l'invention, le laitier vitrifié micronisé est ajouté en remplacement du ciment à raison de 10 à 90% en poids de laitier pour 90 à 10% en poids de ciment. Le laitier vitrifié micronisé peut être aussi ajouté en surdosage par rapport au ciment, à raison de 0 à 20% en poids de laitier pour 100% en poids de ciment.

Le ciment, en présence du laitier micronisé de l'invention, même s'il est présent en faibles quantités, joue le rôle d'activateur. Cette activation chimique est d'autant plus importante qu'elle est accélérée par un traitement thermique, par exemple par étuvage. Cette activation sulfato-alcaline permet au laitier d'être un véritable liant hydraulique.

On peut ainsi gérer la réactivité du laitier micronisé entrant dans la composition du béton par la combinaison de trois paramètres : réactivité propre au produit (réactivité due à sa composition chimique et à sa structure physique), réactivité due à sa surface spécifique et réactivité due au traitement thermique du béton, par exemple étuvage, (durée et température).

Ceci permet de maîtriser la formulation des bétons en fonction des caractéristiques finales requises, et cela de manière très souple.

Le dosage en laitier (substitution par partie au ciment ou en ajout par surdosage au ciment) peut être adapté à chaque produit.

L'introduction du laitier micronisé dans la composition des bétons permet de réaliser un matériau qui, à performances égales, est beaucoup plus économique, car ce laitier micronisé peut être produit à faible coût.

Il est possible également, dans le cadre de l'invention, d'ajouter aussi au béton au moins un constituant secondaire ou ajout choisi parmi ceux utilisés jusqu'à présent, par exemple des produits pouzzolaniques, de la fumée de silice, etc.

Sous un autre aspect, l'invention a pour objet un procédé de préparation d'un béton tel que défini précédemment, dans lequel on malaxe ensemble les constituants (ciment, granulats, adjuvants et agents éventuels, laitier) en présence d'eau pour former un mélange pâteux. Du fait que le laitier micronisé est malaxé aux autres constituants en présence d'eau, donc à l'état humide, il se mélange parfaitement avec ceux-ci.

Conformément à ce procédé, le laitier est avantageusement préparé par broyage par une technique de broyage à jets d'air ou à presse à rouleaux à partir d'un laitier vitrifié pré-broyé pour obtenir une granulométrie de 0-50 µm et une surface spécifique Blaine de 3000 à 8000 cm2/g.

Selon une autre caractéristique du procédé de l'invention, le béton ainsi préparé est soumis à un traitement thermique, par exemple à un cycle d'étuvage, pour la préfabrication de produits en béton armé ou béton précontraint.

Dans la description qui suit, faite seulement à titre d'exemple, on se réfère au dessin annexé, sur lequel :
- la figure 1 représente, de façon schématique, les différentes phases de transformation d'un laitier vitrifié (bouleté ou granulé) en une poudre micronisée de granulométrie contrôlée;
- la figure 2 représente schématiquement une installation pour la fabrication d'un béton selon l'invention;
- la figure 3 montre différentes courbes représentant l'évolution de la résistance à la compression Rc, exprimée en MPa, pour un béton selon l'invention, en fonction du pourcentage de laitier micronisé, et cela à différents âges du béton (8 heures, 2 jours, 7 jours et 28 jours), le béton ayant été soumis à un cycle d'étuvage;
- la figure 4 montre différentes courbes établies dans les mêmes conditions que dans la figure 3, le béton n'ayant pas été soumis à un cycle d'étuvage;
- la figure 5 montre différentes courbes représentant l'évolution de la résistance à la flexion Rf, exprimée en MPa, pour un béton selon l'invention, en fonction du pourcentage de laitier micronisé, à différents âges du béton (8 heures, 2 jours, 7 jours et 28 jours), le béton ayant été soumis à un cycle d'étuvage; et
- la figure 6 montre différentes courbes établies dans les mêmes conditions que pour la figure 5, le béton n'ayant pas été soumis à un cycle d'étuvage.

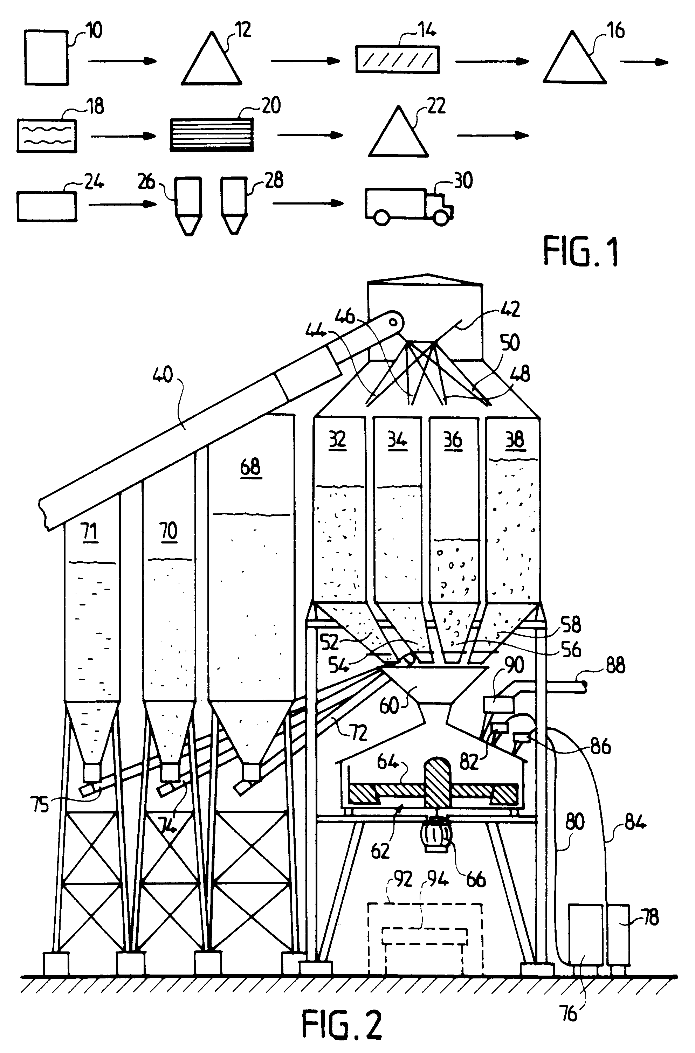

On a représenté sur la figure 1 un haut-fourneau 10 produisant de la fonte et du laitier. A la sortie du haut-fourneau, le laitier est soumis à un traitement par trempe pour former un laitier vitrifié bouleté ou granulé. Celui-ci est transporté pour former un tas de stockage 12. De là, le laitier est soumis à un criblage sur un crible 14 et le laitier vitrifié criblé est ensuite transporté pour former un tas de stockage 16. De là, il est soumis à une action de séchage dans un séchoir 18. A la sortie du séchoir, le laitier vitrifié est soumis à une action de prébroyage dans un broyeur 20, par exemple du type à boulets, qui permet de produire un laitier ayant une granulométrie de 0 à 2 mm.

Le laitier pré-broyé est ensuite envoyé vers un réservoir de stockage 22 pour être ensuite introduit dans un broyeur 24 à jets d'air. Ce dernier peut être choisi parmi l'un ou l'autre des broyeurs à jets d'air connus, tels que définis précédemment. Ce broyeur permet de maîtriser la granulométrie du laitier vitrifié, cette dernière étant généralement comprise entre 0 et 50 µm, et d'obtenir une surface spécifique Blaine de 3000 à 8000 cm2/g. Le laitier ainsi micronisé est ensuite envoyé dans des silos de stockage 26 et 28, ces derniers pouvant recevoir, par exemple, des laitiers de granulométries différentes. A la place d'un broyeur à jets d'air, il est possible d'utiliser une presse à rouleaux.

Le laitier micronisé peut être ensuite expédié par un moyen de transport 30, par exemple un camion, vers une usine de fabrication du béton.

On se réfère maintenant à la figure 2 qui montre précisément une installation de fabrication du béton pouvant être utilisé dans l'invention.

L'installation comprend quatre silos de stockage 32, 34, 36 et 38 destinés à stocker des granulats. Par exemple, les silos 32 et 34 peuvent être destinés à stocker respectivement des sables de granulométries différentes et les silos 36 et 38 à stocker respectivement des graviers de granulométries différentes.

Les quatre silos précités peuvent être remplis au moyen d'un tapis roulant 40 propre à amener et déverser des granulats, sables ou graviers, dans un casque de réception 42 à quatre cases (non représentées). Le casque de réception 42 peut ensuite alimenter au choix les silos 32, 34, 36 et 38, respectivement par l'intermédiaire de goulottes 44, 46, 48 et 50.

Les quatre silos 32, 34, 36 et 38 sont munis respectivement de goulottes de sortie 52, 54, 56, 58 propres à déverser du granulat dans une trémie de pesage 60, laquelle surmonte un malaxeur 62 comportant intérieurement des pales 64 entraînées par un moteur 66.

L'installation comprend en outre un silo 68 de stockage du ciment et deux silos 70 et 71 de stockage d'ajouts. Ces derniers sont destinés, conformément à l'invention, au stockage de laitier micronisé, à deux finesses différentes.

Les silos 68, 70 et 71 peuvent alimenter la trémie 60 respectivement au moyen d'une vis à ciment 72, d'une vis à pulvérulent 74 et d'une vis à pulvérulent 75.

L'installation comprend par ailleurs deux récipients 76 et 78 propres à contenir deux adjuvants différents.

Le récipient 76 alimente la trémie 60 par l'intermédiaire d'une conduite 80 munie d'un dispositif de pesage 82, tandis que le récipient 78 alimente la trémie 60 par l'intermédiaire d'une conduite 84 munie d'un dispositif de pesage 86.

L'installation comprend aussi une conduite 88 d'admission d'eau débouchant dans la trémie 60 et munie d'un dispositif de pesage 90.

L'installation comprend aussi une cabine 92 et un poste de commande à distance 94 pour piloter la sélection des cases du casque de réception 42, la trémie de pesage 60, les dispositifs de pesage 82 et 86, ainsi que le dispositif de pesage d'eau 90.

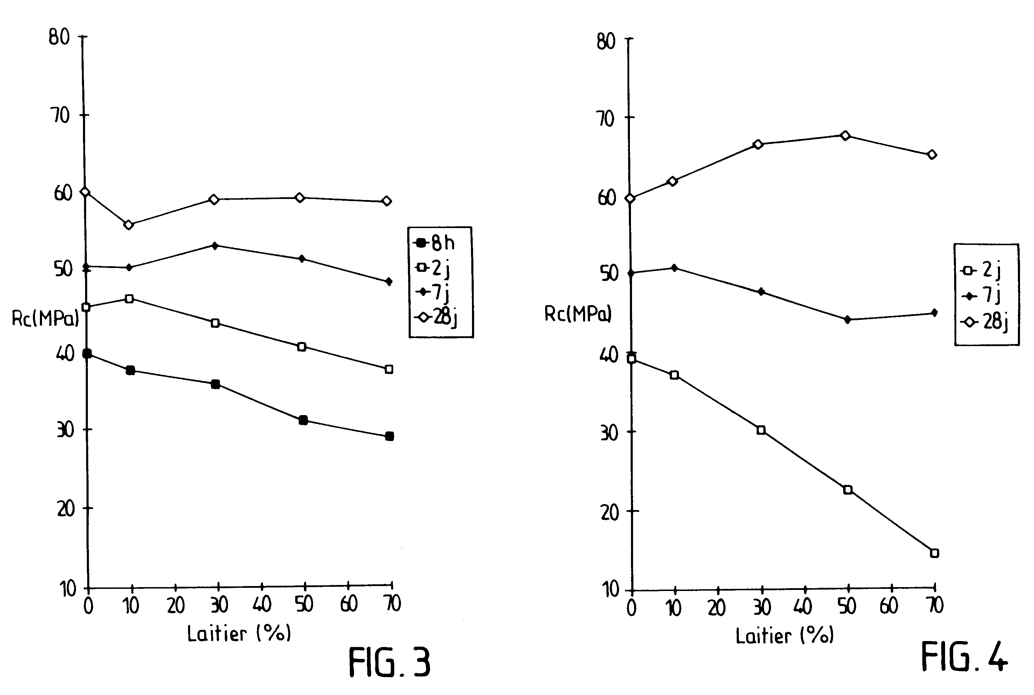

On se réfère maintenant aux figures 3 et 4 montrant respectivement les variations de la résistance à la compression Rc, exprimées en MPa, avec étuvage et sans étuvage pour un mortier normalisé représentatif d'un béton selon l'invention, en fonction du pourcentage de laitier micronisé mélangé avec le ciment. Les courbes montrent l'évolution de la compression pour un mortier ayant un âge de 8 heures, 2 jours, 7 jours et 28 jours.

Ainsi, un mortier comportant 0% de laitier possède une Rc d'environ 40 MPa à l'âge de 2 jours sans étuvage et, dans les mêmes conditions, un mortier à 70% de laitier comporte une Rc d'environ 15 MPa (figure 4).

Si l'on considère maintenant la figure 3, pour le même mortier à 0% de laitier, la Rc passe de 40 à 45 MPa, tandis que pour un mortier à 70% de laitier, la Rc passe de 15 à 38 MPa. Ceci montre que, pour des teneurs élevées en laitier, on ne peut pas démouler le mortier à 2 jours, si l'on ne l'a pas étuvé.

De la comparaison des figures 3 et 4, il résulte que l'on a intérêt à soumettre le mortier à un étuvage pour gagner en résistance à court terme, c'est-à-dire avoir une résistance élevée au jeune âge.

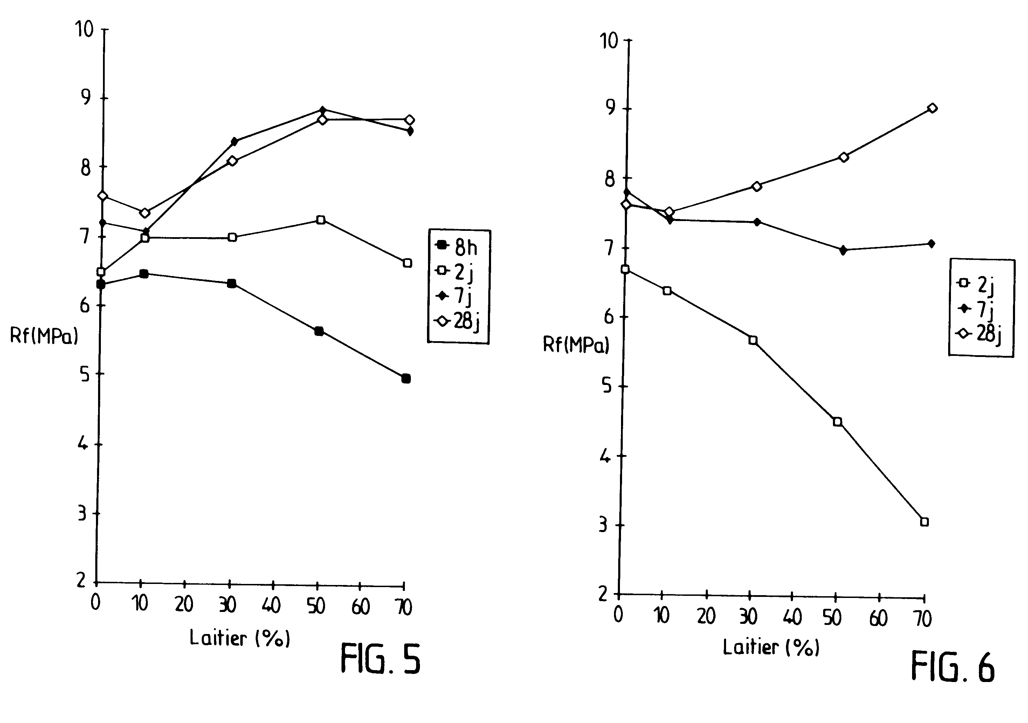

Les figures 5 et 6 montrent respectivement les variations de la résistance en flexion, exprimées en MPa, avec étuvage et sans étuvage, en fonction de la composition du mortier. Là encore, les courbes montrent l'intérêt d'étuver le mortier pour augmenter sa résistance à la flexion à court terme.

Dans le cas particulier d'un laitier ayant une surface spécifique Blaine de 6000 cm2/g utilisé dans un mortier comprenant 30% en poids de ciment et 70% en poids de laitier, la Rc à 2 jours est respectivement de 14 MPa et de 37 MPa, sans étuvage et avec étuvage. La Rc à 28 jours est respectivement de 60 MPa sans étuvage et 58 MPa avec étuvage.

On donnera maintenant, à titre d'exemple, une composition de béton selon l'invention :
. ciment (C) d'une surface spécifique Blaine de 3500 à 5000 cm2/g,
. deux graviers (G1 et G2),
. deux sables (S1 et S2),
. deux laitiers micronisés (L1 et L2) ayant chacun une surface spécifique comprise entre 3000 et 8000 cm2/g,
. eau (E),
. ajouts (A) choisis parmi la fumée de silice ou le méta-kaolin,
. plastifiants (P).

Les matériaux ci-dessus, entrant dans la composition du béton, sont utilisés dans les proportions suivantes :
. (G1 + G2)/(S1 + S2) = 1,30 à 1,70
. E/X = 0,40 à 0,50, avec X = C + L1 + L2 + A
. A = 0 à 10% en poids de X,
. P = 0 à 3% en poids de X,
. C + L1 + L2 = 250 à 500 kg/m3.

Bien entendu, il est possible, conformément à l'invention, d'obtenir différentes compositions de béton en fonction de l'utilisation souhaitée.

Comme déjà indiqué, on peut maîtriser la réactivité du laitier en jouant sur les trois paramètres suivants : réactivité propre au laitier, granulométrie du laitier et conditions de traitement thermique.

De plus, l'introduction du laitier micronisé permet de réaliser un matériau qui, à performances égales, est beaucoup plus économique.

Ce laitier, du fait qu'il est micronisé, est réactif à court terme. Si le béton est en outre soumis à un cycle thermique, par exemple un cycle d'étuvage, le laitier devient utilisable dans la préfabrication de béton armé et précontraint.

L'invention permet surtout d'obtenir un béton dans des conditions très économiques, du fait de l'économie qu'entraîne l'utilisation du laitier par rapport au ciment.

Le laitier de haut-fourneau est un matériau peu cher et disponible en grandes quantités. Sa composition chimique et sa structure physique sont en général parfaitement contrôlées, si bien que le produit est fiable.

Par les techniques de micronisation, on peut transformer un déchet en un véritable liant hydraulique, ce qui constitue une valorisation importante du matériau.

Par ailleurs, il est à signaler que le laitier micronisé, même présent à des surfaces spécifiques élevées de 8000 cm2/g selon la méthode Blaine, présente l'avantage de ne pas s'hydrater au contact de l'air, contrairement au ciment. Ceci constitue une amélioration importante au niveau du stockage et de la conservation.

Même à des surfaces spécifiques Blaine de 8000 cm2/g, le laitier se manutentionne aisément, contrairement aux fumées de silice qui doivent être densifiées et posent des problèmes de colmatage dans les silos et les convoyeurs.

La technologie des broyeurs à jets d'air permet de contrôler parfaitement la granulométrie du laitier micronisé et rend possible un broyage avec toutes les finesses désirées.

Pour une résistance requise au jour J, on peut ainsi combiner le dosage en laitier par rapport à sa finesse, voire utiliser un mélange de deux finesses différentes. On peut donner les exemples suivants :
- 10% de laitier à 8000 cm2/g Blaine + 100% de ciment,
- 70% de laitier à 6000 cm2/g Blaine + 30% de ciment,
- 30% de laitier à 3000 cm2/g Blaine + 50% de laitier à 8000 cm2/g Blaine + 20% de ciment.

Dans le premier exemple, le laitier est utilisé en surdosage par rapport au ciment, tandis que, dans les deux derniers exemples, il est utilisé en substitution au ciment.

On remarque également, après traitement thermique, que si les résistances en compression sont quasiment constantes à 28 jours, quelle que soit la teneur en laitier (à 6000 cm2/g), par contre les résistances mécaniques en flexion croissent à partir de deux jours en fonction de la teneur en laitier. Le gain réalisé sur les résistances en flexion par l'emploi du laitier micronisé avec étuvage permet de retarder le stade de l'utilisation des étriers pour combattre l'effort tranchant dans une poutre en béton armé', par exemple.

Enfin, il faut signaler que l'utilisation d'un laitier micronisé dans un béton conformément à l'invention permet encore d'améliorer les propriétés du béton et en particulier sa durabilité. Parmi les propriétés ainsi améliorées, on peut citer : la tenue au gel-dégel, la résistance aux sulfates et aux eaux agressives, la résistance à l'alcali-réaction, la protection des fibres de verre, une meilleure liaison entre la pâte et les granulats, la diminution des efflorescences et la limitation des transferts de fluide à l'intérieur du béton.

Par ailleurs, l'aspect des surfaces de décoffrage est amélioré, et la teinte du béton est plus claire. Il faut aussi signaler que la chaleur d'hydratation dégagée pendant la prise du laitier est moindre que dans le cas du ciment. Il en résulte que la température interne des pièces massives est plus faible et que les retraits dus aux variations thermiques sont moins importants.

L'invention trouve son utilisation principale dans la fabrication et la préfabrication de produits en béton armé ou béton précontraint.

## Revendications

**1.-** Béton du type comprenant, comme constituants principaux, un ciment et des granulats ainsi que des adjuvants éventuels propres à être malaxés ensemble avec de l'eau pour former un mélange pâteux, caractérisé en ce qu'il comprend en outre un laitier de haut-fourneau vitrifié, micronisé à une granulométrie de 0-50 µm, possèdant une surface spécifique Blaine de 3000 à 8000 cm2/g, et ajouté aux constituants du mélange en substitution ou en ajout au ciment.

**2.-** Béton selon la revendication 1, caractérisé en ce que le laitier vitrifié micronisé est obtenu par broyage ultrafin d'un laitier vitrifié, présent à l'état granulé ou bouleté.

**3.-** Béton selon l'une des revendications 1 et 2, caractérisé en ce que le laitier vitrifié micronisé est obtenu par une technique de broyage par jets d'air ou par presse à rouleaux à partir d'un laitier vitrifié pré-broyé ou non.

**4.-** Béton selon l'une des revendications 1 à 3, caractérisé en ce que le laitier vitrifié micronisé est présent à l'état de mélange de deux laitiers vitrifiés micronisés ayant des granulométries différentes.

**5.-** Béton selon l'une des revendications 1 à 4, caractérisé en ce que le laitier vitrifié micronisé est ajouté en remplacement du ciment à raison de 10-90% en poids pour 90-10% en poids de ciment.

**6.-** Béton selon l'une des revendications 1 à 4, caractérisé en ce que laitier vitrifié micronisé est ajouté en surdosage par rapport au ciment à raison de 0-20% en poids de laitier pour 100% en poids de ciment.

**7.-** Béton selon l'une des revendications 1 à 6, caractérisé en ce qu'il comprend en outre au moins un constituant secondaire ou ajout choisi parmi des produits pouzzoloniques et de la fumée de silice.

**8.-** Béton selon l'une des revendications 1 à 7, caractérisé par la composition suivante :
. un ciment (C) d'une surface spécifique Blaine de 3500-5000 cm2/g,
. deux graviers (G1 et G2),
. deux sables (S1 et S2),
. deux laitiers micronisés (L1 et L2) ayant chacun une surface spécifique Blaine comprise entre 3000 et 8000 cm2/g,
. eau (E),
. un ajout (A) choisi parmi la fumée de silice et le méta-kaolin,
. plastifiant (P).

**9.-** Béton selon la revendication , caractérisé par les relations suivantes :
. (G1 + G2)/(S1 + S2) = 1,30 à 1,70,
. E/X = 0,40 à 0,50 avec X = C + L1 + L2 + A,
. A = 0 à 10% en poids de X,
. P = 0 à 3% en poids de X,
. C + L1 + L2 = 250 à 500 kg/m3.

**10.-** Procédé de préparation d'un béton selon l'une des revendications 1 à 9, caractérisé en ce que l'on malaxe ensemble les constituants (ciment, granulats, adjuvants et ajouts éventuels et laitier micronisé) en présence d'eau pour former un mélange pâteux.

**11.-** Procédé selon la revendication 10, caractérisé en ce que l'on prépare le laitier micronisé par une technique de broyage à jets d'air ou à presse à rouleaux à partir d'un laitier vitrifié granulé ou bouleté pour obtenir une granulométrie de 0-50 µm et une surface spécifique Blaine de 3000 à 8000 cm²/g.

**12.-** Procédé selon l'une des revendications 10 et 11, caractérisé en ce que le béton ainsi préparé est soumis à un traitement thermique, par exemple un cycle d'étuvage, pour la préfabrication de produits en béton armé ou béton précontraint.
